(19) **Europäisches Patentamt European Patent Office Office européen des brevets**

(11) **EP 3 414 701 B1**

(12) **FASCICULE DE BREVET EUROPEEN**

(45) Date de publication et mention de la délivrance du brevet:
**01.04.2026 Bulletin 2026/14**

(21) Numéro de dépôt: **17707639.5**

(22) Date de dépôt: **07.02.2017**

(51) Classification Internationale des Brevets (IPC):
**H04L 9/08** *(2006.01)* **G06F 21/62** *(2013.01)*

(52) Classification Coopérative des Brevets (CPC):
**G06F 21/6254; H04L 9/0861;** H04L 2209/046; H04L 2209/42

(86) Numéro de dépôt international:
**PCT/FR2017/050271**

(87) Numéro de publication internationale:
**WO 2017/137689 (17.08.2017 Gazette 2017/33)**

(54) **PROCÉDÉ ET DISPOSITIF D'ANONYMISATION DE DONNÉES STOCKÉES DANS UNE BASE DE DONNÉES**

VERFAHREN UND SYSTEM ZUR ANONYMISIERUNG VON DATENBANK GESPEICHERT DATEN

ANONYMIZATION PROCESS AND SYSTEM FOR DATA STORED IN A DATABASE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **09.02.2016 FR 1651021**

(43) Date de publication de la demande:
**19.12.2018 Bulletin 2018/51**

(73) Titulaire: **Orange**
**92130 Issy-les-Moulineaux (FR)**

(72) Inventeurs:
• **CANARD, Sébastien**
**14000 CAEN (FR)**
• **OLIVIER, Baptiste**
**14000 CAEN (FR)**
• **BRUNET, Solenn**
**14000 CAEN (FR)**
• **LE HELLO, Dominique**
**14480 LE FRESNE CAMILLY (FR)**

(74) Mandataire: **Cabinet Beau de Loménie**
**103, rue de Grenelle**
**75340 Paris Cedex 07 (FR)**

(56) Documents cités:
US-A1- 2013 145 473    US-A1- 2013 145 473

• **SHEN-SHYANG HO ET AL: "Differential privacy for location pattern mining", PROCEEDINGS OF THE 4TH ACM SIGSPATIAL INTERNATIONAL WORKSHOP ON SECURITY AND PRIVACY IN GIS AND LBS, SPRINGL '11, 1 January 2011 (2011-01-01), New York, New York, USA, pages 17, XP055313148, ISBN: 978-1-4503-1032-1, DOI: 10.1145/2071880.2071884**
• **CYNTHIA DWORK ET AL: "Analyze gauss", THEORY OF COMPUTING, ACM, 2 PENN PLAZA, SUITE 701 NEW YORK NY 10121-0701 USA, 31 May 2014 (2014-05-31), pages 11 - 20, XP058051063, ISBN: 978-1-4503-2710-7, DOI: 10.1145/2591796.2591883**
• **GEORGIOS KELLARIS ET AL: "Practical differential privacy via grouping and smoothing", PROCEEDINGS OF THE VLDB ENDOWMENT, vol. 6, no. 5, 1 March 2013 (2013-03-01), New York, NY, pages 301 - 312, XP055571458, ISSN: 2150-8097, DOI: 10.14778/ 2535573.2488337**
• **SHEN-SHYANG HO ET AL: "Differential privacy for location pattern mining", PROCEEDINGS OF THE 4TH ACM SIGSPATIAL INTERNATIONAL WORKSHOP ON SECURITY AND PRIVACY IN GIS AND LBS, SPRINGL '11, 1 January 2011 (2011-01-01), New York, New York, USA, pages 17, XP055313148, ISBN: 978-1-4503-1032-1, DOI: 10.1145/2071880.2071884**

- **CYNTHIA DWORK ET AL: "Analyze gauss", THEORY OF COMPUTING, ACM, 2 PENN PLAZA, SUITE 701 NEW YORK NY 10121-0701 USA, 31 May 2014 (2014-05-31), pages 11 - 20, XP058051063, ISBN: 978-1-4503-2710-7, DOI: 10.1145/2591796.2591883**

**Description**

Arrière-plan de l'invention

L'invention se rapporte au domaine général du traitement de l'information.

Elle concerne plus particulièrement l'anonymisation de données « personnelles », relatives à des individus, et stockées dans une base de données d'un système informatique (ex. sur un serveur). On entend généralement par « données personnelles » des données qui concernent des personnes identifiées directement ou indirectement.

Les données personnelles peuvent être de différentes natures, et concerner indifféremment des personnes physiques ou morales. Il s'agit par exemple de données médicales, de données universitaires, de données qui reflètent certaines caractéristiques d'individus acquises sur ou via un ou plusieurs réseaux de communication, telles que des données d'un graphe social d'individus représentant un réseau de connexions et de relations de ces individus (couramment désigné par « réseau social »), des données extraites de comptes-rendus d'appels réalisés dans un réseau de télécommunications (représentatives de la mobilité des individus entre les différentes antennes relais du réseau), des données de navigation des individus sur le réseau public Internet (et notamment les sites visités et les transitions d'un site à l'autre), des données relatives à l'utilisation par des individus de divers objets connectés, etc. On comprend bien dès lors que rendre publiques ce type de données peut porter atteinte à la vie privée des individus concernés. Or, avec le développement aujourd'hui des réseaux de télécommunications et des services de plus en plus nombreux qui s'appuient sur ces réseaux (réseaux sociaux, objets connectés, etc.), on assiste à une augmentation spectaculaire des données personnelles qui s'échangent via ou sur ces réseaux.

Il existe aujourd'hui dans l'état de la technique, différentes méthodes permettant d'anonymiser (i.e. de rendre anonymes) des données personnelles stockées dans une base de données. Par opposition aux données personnelles, des données anonymes telles que celles qui peuvent être obtenues via ces méthodes désignent des données à partir desquelles il est impossible de :

(i) cibler un individu,
(ii) savoir si des données sont liées à un unique individu, et
(iii) inférer des informations sur un individu.

Ainsi, l'anonymisation de données consiste à modifier le contenu ou la structure des données personnelles afin de rendre très difficile voire impossible l'identification des individus concernés à partir des données anonymisées. Ceci offre la possibilité à des entités possédant des données personnelles sur des individus de les rendre publiques (par exemple pour des opérations de fouille de données aussi connue sous l'appellation de « data mining » en anglais) sans risque de dévoiler des informations sensibles sur ces individus.

Une méthode d'anonymisation connue est notamment la « confidentialité différentielle », plus communément désignée par « privacy différentielle » ou encore par « differential privacy » en anglais. La confidentialité différentielle permet d'anonymiser des données contenues dans une base de données statistique telle qu'un graphe ou une matrice obtenu(e) en agrégeant (par exemple, en sommant ou en moyennant) les données personnelles relatives à plusieurs individus. Cette technique est particulièrement avantageuse et appréciée car elle permet de quantifier formellement et rigoureusement le niveau d'anonymat obtenu, autrement dit, le risque de ré-identifier à partir des données anonymes obtenues (i.e. des données « anonymisées ») les données personnelles relatives aux individus en jeu. Ceci offre avantageusement la possibilité de contrôler le compromis entre utilité des données anonymes obtenues et niveau d'anonymat garanti. En effet, un niveau d'anonymat trop élevé peut se traduire par une perte d'information utile concernant les données d'origine. Inversement, un jeu de données anonymes trop proche du jeu de données initial dévoile trop d'informations sur les individus concernés. Un tel contrôle est donc important car il permet de savoir si le niveau d'anonymat considéré est raisonnable ou non.

La confidentialité différentielle ou privacy différentielle a été étudiée abondamment et décrite en détail notamment dans le document de C. Dwork, F. McSherry, K. Nissim et A. Smith intitulé « Calibrating Noise to Sensitivity in Private Data Analysis », Theory of Cryptography, pages 265-284, 2006 (ci-après D1). Cette technique d'anonymisation est par ailleurs largement appliquée dans des contextes où les données manipulées sont représentées sous forme de graphes ou de matrices. Une approche de la privacy différentielle dans ce contexte est décrite dans le document de C. Dwork, K. Talwar, A. Thakurta et L. Zhang intitulé « Analyze Gauss : Optimal Bounds for Privacy-Preserving Principal Component Analysis », STOC'14, 31 mai-3 juin 2014 (ci-après D2).. Cette approche s'appuie sur la création d'un nouveau graphe « synthétique », respectivement d'une nouvelle matrice, statistiquement proche du graphe initial, respectivement de la matrice, que l'on souhaite anonymiser, mais garantissant l'anonymat des individus en jeu.

Un algorithme basique de confidentialité (privacy) différentielle consiste à générer le nouveau graphe, respectivement la nouvelle matrice, en appliquant un bruitage aux données « sensibles » du graphe initial, respectivement de la matrice initiale. Par données sensibles, on entend les données du graphe ou de la matrice qui sont potentiellement affectées par l'ajout ou le retrait des données d'un individu dans ce graphe ou dans cette matrice. Le bruitage des données sensibles est réalisé en ajoutant aux données à anonymiser des variables aléatoires de Laplace de même écart type prédéterminé. Autrement dit, les variables aléatoires utilisées pour bruiter les données à anonymiser ont en moyenne toutes la même amplitude, et cette amplitude est égale à $\frac{\Delta}{\varepsilon}$ où $\Delta$ désigne la sensibilité des données et $\varepsilon$ est un paramètre (i.e. une mesure) représentatif(ve) du niveau de confidentialité ou d'anonymat assuré. La sensibilité $\Delta$ dépend de la base de données considérée. Elle mesure les variations induites sur les graphes ou sur les matrices obtenu(e)s à partir de la base de données par ajout ou retrait des données d'un individu.

Cet algorithme aléatoire de privacy différentielle est dit « différentiellement confidentiel d'ordre $\varepsilon$ » (ou « $\varepsilon$-differentially private » en anglais aussi noté $\varepsilon$-DP). Cela signifie que deux bases de données anonymisées par cet algorithme ont *quasiment* la même loi de probabilité si les bases de données fournies en entrée de l'algorithme sont voisines, c'est-à-dire diffèrent par la contribution d'un unique individu. Le « quasiment » est mesuré par le paramètre $\varepsilon$ : plus $\varepsilon$ est petit, plus les lois de probabilités sont proches et plus il est difficile de détecter la participation d'un individu particulier dans les bases de données (meilleur est donc l'anonymat atteint), ce qui correspond au but recherché par la confidentialité différentielle. On note que le paramètre $\varepsilon$ et l'anonymat atteint par l'algorithme varient en sens inverse, i.e. plus $\varepsilon$ est petit et meilleur est l'anonymat garanti par l'algorithme.

Toutefois également, plus $\varepsilon$ est petit, et plus la base de données anonyme s'éloigne de la base de données initiale : il s'ensuit donc une perte d'information utile. Ainsi, comme mentionné précédemment, pour tout algorithme de confidentialité différentielle, la qualité des données anonymisées tend à se dégrader au fur et à mesure que le paramètre $\varepsilon$ diminue (autrement dit que le niveau d'anonymat atteint augmente). Entre deux algorithmes de confidentialité différentielle conduisant à une même mesure $\varepsilon$ représentative du niveau d'anonymat atteint, on privilégiera donc l'algorithme qui propose la meilleure qualité des données anonymes (i.e. la base de données anonyme la plus proche de la matrice initiale).

Le document de Shen-Shyang Ho et al intitulé « Differential privacy for locatin pattern mining », Proceedings of the 4th ACM Sigspatial International Workshop on Security and Privacy in GIS and LBS, Springl'11, 1 janvier 2011, ainsi que le document US 2013/145473 décrivent tous deux des procédé permettant d'anonymiser des données spatiales et conformes à la confidentialité différentielle.

Le document GEORGIOS KELLARIS ET AL: "Practical differential privacy via grouping and smoothing",PROCEEDINGS OF THE VLDB ENDOWMENT, vol. 6, no. 5, 1 mars 2013 décrit une méthode pour partager des statistiques sensibles (par exemple sur des déplacements ou des données médicales) tout en protégeant la vie privée. Cette méthode propose notamment de regrouper et lisser les données avant d'y introduire un bruit.

Objet et résumé de l'invention

L'invention propose un algorithme de confidentialité différentielle (privacy différentielle) offrant une qualité accrue des données anonymes générées par rapport à l'approche retenue dans l'état de la technique tout en garantissant un niveau d'anonymat déterminé (ou de façon équivalente un paramètre $\varepsilon$ déterminé).

Plus particulièrement, l'invention propose un procédé d'anonymisation de données selon la revendication 1 et un dispositif d'anonymisation de données selon la revendication 10.

Autrement dit, l'invention propose un algorithme de confidentialité (privacy) différentielle dont le niveau d'anonymat peut être rigoureusement quantifié (via la mesure, i.e. le paramètre, $\varepsilon$) et dans lequel les données initiales de la base de données sont bruitées avec un niveau de bruit qui dépend de leur niveau de sensibilité. L'invention s'appuie en effet sur le constat que pour de nombreux jeux de données obtenus dans divers contextes (réseaux sociaux, réseaux d'objets connectés, réseaux mobiles, etc.), certaines données sont plus sensibles que d'autres, c'est-à-dire qu'on peut extraire davantage d'informations à propos d'un individu particulier à partir de ces données. Plus précisément une donnée de la base de données est considérée comme « très sensible » si sa valeur est susceptible de beaucoup changer lors de l'ajout ou du retrait d'un individu dans la base de données. A l'opposé, une donnée est considérée comme « peu » sensible si sa valeur est amenée à peu changer en ajoutant ou en retirant la contribution d'un individu dans la base. La sensibilité d'une donnée traduit donc en quelque sorte le niveau d'anonymat inhérent à cette donnée.

Le bruitage retenu dans l'état de la technique (et notamment dans les documents D1 et D2 précités de Dwork et al.) propose d'appliquer un niveau de bruit de façon homogène sur l'ensemble des données sensibles : on comprend bien dès lors qu'une telle application homogène peut résulter en une destruction de l'information présente sur les données ayant les amplitudes les plus faibles de la base de données. *A contrario,* l'invention propose avantageusement de bruiter les données en tenant compte de leur sensibilité avec un bruit calibré en conséquence. Ainsi, préférentiellement, une donnée très sensible (i.e. peu anonyme) est bruitée selon l'invention avec un bruit d'amplitude plus importante et inversement. Autrement dit, lors de l'étape d'anonymisation des données initiales, le niveau de bruit appliqué sur les données sensibles d'un sous-ensemble augmente préférentiellement avec le niveau de sensibilité de ce sous-ensemble.

On note qu'aucune limitation n'est attachée au nombre de sous-ensembles considérés pour partitionner l'ensemble des données sensibles en fonction de leur niveau de sensibilité. Toutefois, les inventeurs ont constaté qu'en considérant seulement deux sous-ensembles, de très bonnes performances pouvaient être obtenues.

Ainsi, en tenant compte de la sensibilité propre des données destinées à être bruitées, l'invention ajoute une granularité dans les algorithmes de confidentialité différentielle décrits dans les documents de Dwork et al. et permet d'améliorer la qualité de cet algorithme. En effet, la base de données synthétique obtenue grâce à l'invention est plus proche de la base des données initiales (en adaptant avantageusement le bruitage appliqué aux données en fonction notamment de l'anonymat inhérent à ces données). Les statistiques de la base de données synthétique (c'est-à-dire anonymisée) reflètent ainsi des statistiques plus proches de la réalité (c'est-à-dire de celles de la base de données initiale) et cela pour un même niveau d'anonymat.

On note en outre que contrairement à l'invention, l'algorithme de confidentialité différentielle décrit dans le document D2 de Dwork et al. permet uniquement de générer des matrices ou des graphes symétriques. L'invention ne se limite pas à ce cas d'usage qui peut s'avérer contraignant.

Par ailleurs, l'invention ne se restreint pas à l'obtention d'une structure de données anonymisées particulière (par exemple d'une matrice suivant un modèle particulier). Elle s'oppose en cela à certaines techniques d'anonymisation connues qui s'appuient sur la génération aléatoire de graphes synthétiques à partir de statistiques anonymes bien choisies. Or une telle génération aléatoire peut conduire à des graphes ayant une structure particulière comme par exemple un modèle de Kronecker ou un modèle exponentiel, ce qui peut s'avérer restrictif.

La méthode d'anonymisation proposée par l'invention est en outre très flexible. Elle propose une notion d'anonymat très générale qui permet de pouvoir choisir librement le type et le niveau d'anonymat souhaités (en laissant un individu influencer plus ou moins de données de la base de données), desquels va dépendre la qualité de la base de données synthétique et anonyme obtenue. Ainsi, à titre illustratif, lorsque l'on cherche à anonymiser des données agrégées à partir de traces de mobilité d'individus dans un réseau de télécommunications (ces traces de mobilité étant par exemple représentatives des trajets des individus entre les différentes antennes relais du réseau), on peut envisager les deux types d'anonymat suivants :

- anonymat par rapport à l'ensemble des trajets de chaque individu ;
- anonymat par rapport au trajet le plus emprunté par chaque individu.

Le premier type d'anonymat est plus fort, car on apprend davantage sur un individu en connaissant tous ses trajets, mais il est également plus difficile à garantir. L'invention peut avantageusement s'appliquer à tout type d'anonymat recherché (les deux types d'anonymat précités ainsi que bien d'autres), contrairement à de nombreuses méthodes de l'état de la technique qui se concentrent uniquement sur le second type d'anonymat précité.

Dans un mode particulier de réalisation, le bruitage des données sensibles d'au moins un sous-ensemble indexé par i comprend l'ajout d'un bruit à ces données sensibles ayant une distribution de Laplace et dont un écart-type $\sigma_i$ est défini à partir du niveau de sensibilité $\Delta_i$ déterminé pour le sous-ensemble et d'une mesure $\varepsilon$ d'un niveau d'anonymat de l'anonymisation des données initiales.

Par exemple, l'écart-type $\sigma_i$ est égal à :

$$\sigma_i = \sqrt{2} \times \frac{L\Delta_i}{\varepsilon}$$

où L désigne le nombre de sous-ensembles contenus dans la pluralité de sous-ensembles.

Le bruitage des données sensibles au moyen d'un bruit de Laplace permet de garantir que l'algorithme proposé par l'invention est différentiellement confidentiel d'ordre $\varepsilon$ (i.e. «$\varepsilon$-differentially private » ou encore $\varepsilon$-DP). Autrement dit, l'invention dans ce mode de réalisation permet de garantir une confidentialité très forte.

Toutefois, l'invention ne se limite pas à un bruitage au moyen de variables aléatoires de Laplace. Ainsi, en variante, on peut envisager un bruitage au moyen de variables aléatoires gaussiennes. Il convient cependant de noter que pour une distribution de bruit gaussienne, le niveau de confidentialité garanti est moins fort que lorsqu'un bruit de Laplace est envisagé pour tous les sous-ensembles de données sensibles. On parle alors de confidentialité différentielle d'ordre ($\varepsilon$, $\delta$) (i.e. « ($\varepsilon$, $\delta$)-differentially private »). En adaptant la définition mathématique du niveau de sensibilité à la distribution de bruit envisagée, il est toutefois possible de gagner en termes de précision (c'est-à-dire de diminuer l'erreur entre les données initiales et les données anonymes obtenues à l'issue de l'étape d'anonymisation).

Selon une autre variante encore, des bruits ayant des distributions différentes en fonction des sous-ensembles de données sensibles considérés peuvent être appliqués. Ainsi, par exemple, on peut envisager une distribution de bruit de Laplace pour les données les moins sensibles et une distribution de bruit de Gauss pour les données les plus sensibles. Une étude approfondie du niveau de confidentialité alors offert par la combinaison choisie est nécessaire, et un soin particulier doit être apporté au choix des écarts-type des bruits appliqués dans une telle configuration.

Dans un mode particulier de réalisation, les niveaux de bruit appliqués aux sous-ensembles de données sensibles résultant de l'étape de partitionnement sont choisis de sorte à minimiser une erreur évaluée entre les données initiales et les données anonymes obtenues à l'issue de l'étape d'anonymisation.

Ce mode de réalisation tend à améliorer voire optimiser les performances de l'algorithme d'anonymisation proposé par l'invention.

De façon similaire, la partition de l'ensemble de données sensibles appliquée lors de l'étape de partitionnement peut être déterminée de sorte à minimiser une erreur évaluée entre les données initiales et les données anonymes obtenues à l'issue de l'étape d'anonymisation.

Dans un mode particulier de réalisation, les données considérées dans l'invention c'est-à-dire les données initiales, les données sensibles bruitées et/ou les données anonymes obtenues à l'issue de l'étape d'anonymisation sont stockées dans des matrices.

Cette représentation matricielle est particulièrement avantageuse pour mettre en œuvre l'invention, car elle simplifie les traitements mis en œuvre sur les données précitées qui sont alors réalisés sous forme de traitements matriciels.

Il convient de noter qu'il est aisé de passer d'une représentation sous forme de graphe à une représentation matricielle.

Dans ce mode de réalisation où les données manipulées par l'invention sont stockées sous forme matricielle, l'étape d'anonymisation peut comprendre en outre avantageusement une décomposition de la matrice des données sensibles bruitées en valeurs singulières et une détermination de la matrice des données anonymes à partir d'un nombre déterminé de valeurs singulières résultant de cette décomposition.

L'étape d'anonymisation ainsi mise en œuvre comprenant le bruitage des données sensibles en fonction de leur niveau de sensibilité et leur décomposition en valeurs singulières (ou SVD pour Singular Value Decomposition) permet d'améliorer encore la qualité de l'anonymisation offerte par l'invention. En effet, il est nécessaire d'ajouter moins de bruit pour obtenir un même niveau de confidentialité. On gagne ainsi au niveau de l'utilité des données.

Conformément à l'invention :

- au cours de l'étape de partitionnement, le niveau de sensibilité d'une donnée sensible est défini comme la valeur maximale, prise sur l'ensemble des matrices voisines de la matrice de données initiales, de la valeur absolue de la différence entre cette donnée sensible et la donnée sensible correspondante de la matrice voisine considérée, cette matrice voisine différant de la matrice de données initiales en raison des données personnelles d'un unique individu ; et/ou

- au cours de l'étape de détermination, le niveau de sensibilité d'un sous-ensemble de données sensibles est défini comme la valeur maximale, prise sur l'ensemble des matrices voisines de la matrice de données initiales, de la somme sur toutes les données sensibles de ce sous-ensemble de la valeur absolue de la différence entre chaque donnée sensible et la donnée sensible correspondante de la matrice voisine considérée.

Ces définitions des niveaux de sensibilité qui s'appuient sur une norme $L_1$ (c'est-à-dire définie à partir d'une somme de valeurs absolues de différences) sont particulièrement bien adaptées lorsque le bruit considéré lors de l'étape d'anonymisation a une distribution de Laplace (en raison notamment de la définition même de celle-ci qui s'appuie sur une norme $L_1$), et permettent de garantir la confidentialité (privacy) différentielle. Pour d'autres distributions, et en particulier pour une distribution gaussienne, une autre norme peut être plus avantageusement utilisée pour définir les sensibilités en jeux, comme par exemple une norme $L_2$, définie à partir de la racine carrée d'une somme de valeurs absolues de différences élevées au carré.

Dans un mode particulier de réalisation, les différentes étapes du procédé d'anonymisation sont déterminées par des instructions de programmes d'ordinateurs.

En conséquence, l'invention vise aussi un programme d'ordinateur sur un support d'enregistrement ou support d'informations, ce programme étant susceptible d'être mis en œuvre dans un dispositif d'anonymisation ou plus généralement dans un ordinateur, ce programme comportant des instructions adaptées à la mise en œuvre des étapes d'un procédé d'anonymisation tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention s'applique avantageusement à tout type de données personnelles d'individus susceptibles d'être stockées dans une base de données d'un système informatique et que l'on souhaite anonymiser, par exemple en vue de les partager ou de les publier. Elle s'applique de façon privilégiée, comme décrit précédemment, à des données qui peuvent être représentées aisément sous forme de matrices, c'est-à-dire typiquement à des données « dynamiques » qui illustrent une activité des individus.

Ainsi, au vu du contexte actuel d'essor des réseaux de communications, l'invention a une application privilégiée mais non limitative lorsque ces données personnelles comprennent notamment des données en relation avec une activité d'une pluralité d'individus sur au moins un réseau. Les données en question peuvent être par exemple, de façon non exhaustive :

- des données de mobilité acquises par un opérateur téléphonique (traces de mobilité entre des antennes relais du réseau ou autres points d'intérêt) ou par tout autre acteur susceptible de réaliser et de stocker un suivi de la mobilité des individus dans son réseau (ex. réseau ferroviaire) ;
- des données acquises sur le réseau Internet représentatives de la navigation des individus sur différents sites web et les transitions opérées entre ces sites ;
- des données acquises sur des réseaux sociaux (graphe social de connexion entre les individus) ;
- des données reflétant l'utilisation par des individus d'objets connectés ;
- etc.

L'invention vise également un système informatique comprenant :

- une base de données dans laquelle sont stockées des données dites initiales résultant d'une agrégation de données personnelles relatives à une pluralité d'individus ; et
- un dispositif d'anonymisation des données initiales selon l'invention.

Le système informatique bénéficie des mêmes avantages cités précédemment que le procédé et le dispositif d'anonymisation.

On peut également envisager, dans d'autres modes de réalisation, que le procédé d'anonymisation, le dispositif d'anonymisation et le système informatique selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système informatique conforme à l'invention dans un mode particulier de réalisation ;
- la figure 2 illustre une représentation sous forme de graphe de données personnelles d'un individu ;
- la figure 3 représente, sous forme schématique, l'architecture matérielle d'un dispositif d'anonymisation selon l'invention, inclus dans le système informatique de la figure 1 ;
- les figures 4 et 5 représentent, sous forme d'ordinogrammes, les principales étapes d'un procédé d'anonymisation selon l'invention telles qu'elles sont mises en œuvre par le dispositif d'anonymisation de la figure 3 dans deux modes particuliers de réalisation de l'invention.

Description détaillée de l'invention

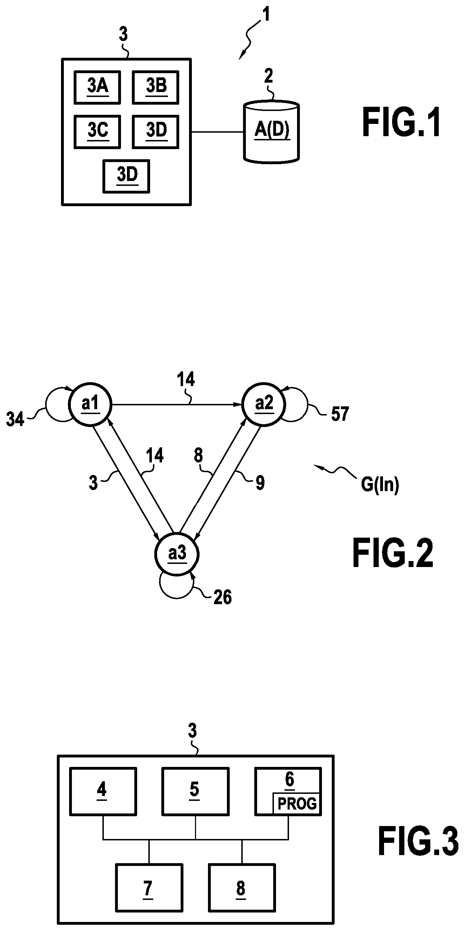

La **figure 1** représente, dans son environnement, un système informatique 1 conforme à l'invention, dans un mode particulier de réalisation. Le système informatique 1 est apte, conformément à l'invention, à anonymiser, c'est-à-dire à rendre anonymes, des données D comprenant des données personnelles d'une pluralité d'individus I1,... IN, N désignant un entier quelconque supérieur à 1.

Bien qu'aucune limitation ne soit attachée à la nature des données personnelles considérées et à la façon dont elles ont été acquises, on considère ici à titre illustratif que les données personnelles traitées par le système informatique 1 sont extraites de traces de mobilité identifiées dans un réseau de télécommunications mobiles pour une pluralité d'individus I1,..., IN. De telles traces de mobilité sont classiquement remontées dans les comptes-rendus d'appels (ou CRA) établis par le réseau, et traduisent la mobilité des individus lors de communications établies sur le réseau de télécommunications mobile entre les différentes antennes relais du réseau, et ce sur une période de temps donnée. Ces traces de mobilité peuvent être aisément modélisées pour chaque individu In, $1 \le n \le N$, sous la forme d'un graphe individuel connecté G(In), tel que représenté à la **figure 2,** ayant K sommets (K désignant un entier supérieur à 1) représentant les antennes relais du réseau mobile par lesquelles transitent les communications établies sur ce réseau. Chaque arête du graphe d'un individu entre deux sommets traduit la transition de cet individu entre les antennes représentées par ces sommets lors d'une communication. Le poids associé à cette arête représente le nombre de communications établies par cet individu durant une période d'observation donnée (ex. deux semaines ici) et au cours desquelles une transition entre ces deux antennes a été détectée par le réseau.

Dans l'exemple illustré à la figure 2, l'individu In considéré a établi un certain nombre de communications sur le réseau mobile durant les deux semaines observées, qui ont transité par l'une au moins des K=3 antennes relais a1, a2 et a3 du réseau. Plus précisément, 34 communications de l'individu In ont été établies via l'antenne relai a1 uniquement, 57 via l'antenne relai a2 et 26 via l'antenne relai a3. Pour 14 communications, une transition de l'antenne relai a1 vers l'antenne relai a2 a été identifiée. Par ailleurs :

- 8 communications ont connu une transition de l'antenne relai a3 vers l'antenne relai a2 ;
- 9 communications ont connu une transition de l'antenne relai a2 vers l'antenne relai a3 ;
- 7 communications ont connu une transition de l'antenne relai a3 vers l'antenne relai a1 ; et
- 3 communications ont connu une transition de l'antenne relai a1 vers l'antenne relai a3.

Cet exemple n'est bien entendu donné qu'à titre illustratif.

On note qu'un tel graphe, s'il tient compte de toutes les antennes relais du réseau mobile (K est alors potentiellement relativement grand), est en général peu connecté, car de nombreuses transitions entre antennes ne sont jamais mises en œuvre par l'individu.

Le graphe G(In) à K sommets peut être représenté de façon équivalente par une matrice d'adjacence de dimensions KxK et notée ici A(G(In)) où chaque coefficient Aij(G(In)) de la matrice, i, j=1,...,K, correspond au poids de l'arête reliant le sommet du graphe indexé par i au sommet du graphe indexé par j. Dans l'exemple du graphe de la figure 2, cette matrice d'adjacence est une matrice 3x3 définie par :

$$A\big(G(In)\big) = \begin{bmatrix} 34 & 14 & 3 \\ 0 & 57 & 9 \\ 7 & 8 & 26 \end{bmatrix}$$

A partir des graphes ou des matrices de chaque individu I1,...,IN, il est possible de définir un graphe ou une matrice de données collectif(ive) obtenu(e) en agrégeant les graphes, respectivement les matrices, de ces différents individus. Cette agrégation consiste ici à sommer sur chaque arête du graphe collectif les poids des arêtes correspondantes des graphes des individus. Pour la représentation matricielle, l'agrégation des matrices individuelles se traduit par une somme des matrices individuelles. On note G, respectivement A, le graphe collectif, respectivement la matrice de données collective, ainsi obtenue.

En variante, d'autres fonctions qu'une somme peuvent être envisagées pour agréger les données individuelles des individus I1,...,IN. Par exemple, on peut considérer une moyenne des contributions individuelles de chaque individu ou une médiane des transitions de chaque individu sur chaque arête du graphe.

Dans la suite de la description, on s'attache à la représentation matricielle A des données D obtenues par agrégation des données personnelles relatives aux individus I1,...,IN. Toutefois cette hypothèse n'est pas limitative en soi, et l'invention s'applique de façon similaire lorsqu'une autre représentation des données est envisagée, par exemple sous forme de graphe.

Les données D de la matrice collective A sont stockées dans une base de données 2 du système informatique 1. Ces données constituent des données « initiales » au sens de l'invention destinées à être anonymisées par le système informatique 1 conformément à l'invention.

A cet effet, le système informatique 1 comprend un dispositif d'anonymisation 3 conforme à l'invention. Dans le mode de réalisation décrit ici, le dispositif d'anonymisation 3 a l'architecture matérielle d'un ordinateur, telle que représentée schématiquement à la **figure 3.**

Il comprend notamment un processeur 4, une mémoire vive 5, une mémoire morte 6, une mémoire non volatile 7 et un module de communication 8. Ce module de communication 8 permet au dispositif d'anonymisation 3 de communiquer avec la base de données 2, et notamment d'accéder aux données D à anonymiser qu'elle contient. Il peut comprendre par exemple une carte réseau ou tout autre moyen permettant de se connecter à un réseau de communication reliant le dispositif d'anonymisation 3 à la base de données 2, ou de communiquer sur un bus de données numériques reliant le dispositif d'anonymisation 3 à la base de données.

En variante, la base de données 2 peut être stockée directement dans une mémoire du dispositif d'anonymisation 3, par exemple dans sa mémoire non volatile 7.

La mémoire morte 6 du dispositif d'anonymisation 3 constitue un support d'enregistrement conforme à l'invention, lisible par le processeur 4 et sur lequel est enregistré un programme d'ordinateur PROG conforme à l'invention, comportant des instructions pour l'exécution des étapes d'un procédé d'anonymisation selon l'invention.

Ce programme d'ordinateur PROG définit de façon équivalente des modules fonctionnels et logiciels ici, représentés sur la figure 1, et configurés pour mettre en œuvre les étapes du procédé d'anonymisation selon l'invention. Ces modules fonctionnels s'appuient ou commandent les éléments matériels 4 à 8 du dispositif d'anonymisation 3 décrits précédemment. Ils comprennent notamment ici :

- un module d'acquisition 3A des données initiales à anonymiser ;
- un module d'identification 3B configuré pour identifier parmi les données initiales un ensemble de données sensibles ;
- un module de partitionnement 3C configuré pour partitionner l'ensemble de données sensibles en une pluralité de sous-ensembles en fonction de leur niveau de sensibilité ;
- un module de détermination 3D configuré pour déterminer un niveau de sensibilité pour chaque sous-ensemble ; et
- un module d'anonymisation 3E des données initiales configuré pour bruiter les données sensibles de chaque sous-ensemble selon un niveau de bruit dépendant du niveau de sensibilité déterminé pour ce sous-ensemble.

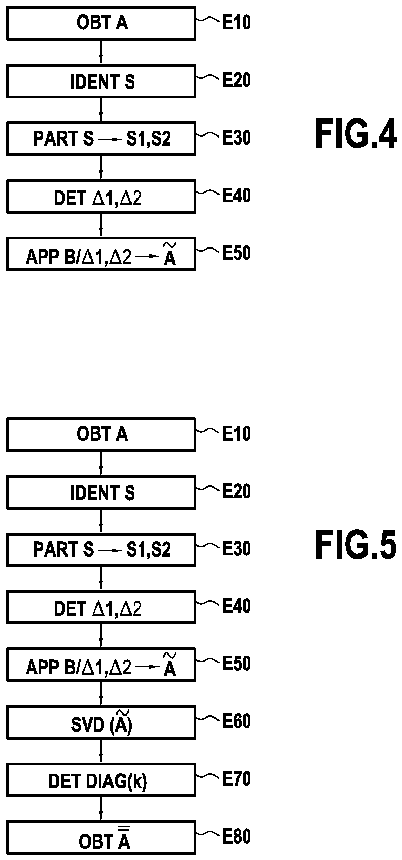

Les fonctions de ces modules sont décrites plus en détail maintenant en référence à la figure 4.

La **figure 4** illustre les principales étapes du procédé d'anonymisation selon l'invention telles qu'elles sont mises en œuvre, dans un premier mode particulier de réalisation, par le dispositif d'anonymisation 3 sur les données initiales D stockées sous forme de matrice A dans la base de données 2 pour générer des données anonymes.

On suppose donc en premier lieu que le dispositif d'anonymisation 3, par l'intermédiaire de son module d'acquisition 3A et son module de communication 8, obtient les données initiales D stockées sous la forme d'une matrice A dans la base de données 2 (étape E10).

Comme mentionné précédemment, la matrice de données A résulte de l'agrégation des données personnelles des individus I1,...,IN. Autrement dit, chaque coefficient Aij de la matrice A est la somme des poids des arêtes reliant les sommets i et j du graphe individuel de chaque individu I1,...IN, c'est-à-dire la somme des coefficients Aij(In), n=1,...,N des matrices individuelles A(In) des individus I1,...,IN, soit :

$$Aij = \sum_{n=1}^{N} Aij(In)$$

pour i,j=1,...,K où K désigne le nombre de sommets de chaque graphe individuel. La matrice de données A est ici une matrice réelle. Ainsi, dans l'exemple des traces de mobilité envisagé à titre illustratif ici :

- N désigne le nombre d'individus (ou clients du réseau mobile) considérés ;
- K désigne le nombre d'antennes relais du réseau mobile considéré, par lesquelles transitent les communications des individus I1,...IN ;
- chaque antenne est indexée par un indice i, i=1,...,K ;
- Aij(In) désigne le nombre de communications (ex. appels) réalisées par l'individu In qui ont transité de l'antenne i vers l'antenne j sur une période de deux semaines ;
- Aij est le nombre total de communications réalisées par la pluralité d'individus I1,...,IN ayant transité de l'antenne i vers l'antenne j sur la période de deux semaines.

Dans la suite de la description, deux matrices A et A' réelles de dimensions KxK sont dites voisines, et notées A~A', si l'une est obtenue de l'autre en ajoutant ou en retirant les données personnelles (poids des arêtes ici) d'un unique individu.

Conformément à l'invention, le dispositif d'anonymisation 3, via son module d'identification 3B, identifie parmi les données initiales stockées dans la matrice A extraite de la base de données 2, un ensemble noté S de données sensibles. Par données sensibles, on entend ici les données de la matrice A qui sont susceptibles d'être affectées par l'ajout ou le retrait dans la base de données personnelles relatives à un individu. Dans le mode de réalisation décrit ici, l'ensemble S des données sensibles est donné par :

$$S = \{(i,j)|Aij \neq Aij', \forall A \sim A'\}$$

Il convient de noter que la privacy différentielle dépend uniquement des changements par ajout ou retrait d'un individu dans la base de données 2. Partant du constat que les coefficients non sensibles, c'est-à-dire pour lesquels Aij=Aij', sont déjà anonymisés (ce sont par exemple des coefficients correspondant à des poids nuls dans le graphe collectif, autrement dit pour lesquels il n'existe pas d'arête entre les sommets i et j), seuls les coefficients sensibles sont anonymisés conformément à l'invention.

Dans l'exemple des traces de mobilité envisagé ici, les coefficients non sensibles sont par exemple les coefficients Aij pour lesquels il n'existe aucun individu ayant établi une communication qui a transité de l'antenne i vers l'antenne j. L'arête (i,j) du graphe collectif G est alors non sensible car son poids est nul indépendamment de la présence ou non d'un ou de plusieurs individus en particulier. Ainsi, selon cet exemple, l'ensemble S correspond à peu de choses près à l'ensemble des trajets entre l'antenne i et l'antenne j effectués par au moins un individu.

Le dispositif d'anonymisation 3, via son module de partitionnement 3C, réalise alors une partition de l'ensemble S des données sensibles, en une pluralité de sous-ensembles S1, S2,..., SL, L désignant un entier supérieur à 1, cette partition étant réalisée en fonction d'un niveau de sensibilité des données sensibles (étape E30). Dans le mode de réalisation décrit ici, on considère une partition de l'ensemble S en L=2 sous-ensembles S1 et S2.

Plus particulièrement, dans le mode de réalisation décrit ici, au cours de cette étape de partitionnement E30, le module de partitionnement 3C évalue pour chaque coefficient Aij de l'ensemble S (i.e. pour chaque donnée sensible de l'ensemble S) son niveau de sensibilité noté $\Delta ij$ (désigné par souci de simplification ultérieurement par sensibilité) selon la formule suivante :

$$\Delta ij = max_{A \sim A'}|Aij - Aij'|$$

Puis pour partitionner l'ensemble de données sensibles S en deux sous-ensembles S1 et S2, le module de partitionnement 3C compare la sensibilité $\Delta ij$ de chaque donnée sensible indexée par le couple (i,j) de l'ensemble S par rapport à un seuil THR prédéterminé, strictement positif. Les données dont la sensibilité est inférieure ou égale au seuil THR sont classées dans le sous-ensemble S1, tandis que les autres données sensibles sont classées dans le sous-ensemble S2, soit :

$$S1 = \{(i,j) \in S|\Delta ij \leq THR\}$$

$$S2 = \{(i,j) \in S|\Delta ij > THR\}$$

Le module de partitionnement 3C obtient ainsi une partition P(THR)=(S1,S2) de l'ensemble de données sensibles S, c'est-à-dire que S est la réunion des deux ensembles disjoints S1 et S2.

Chaque sous-ensemble S1 et S2 a son niveau de sensibilité propre $\Delta 1$ et $\Delta 2$, dépendant des données sensibles qu'il contient. Le dispositif d'anonymisation 3, via son module de détermination 3D, détermine alors pour chaque sous-ensemble S1 et S2, son niveau de sensibilité (étape E40). Dans le mode de réalisation décrit ici, il calcule ce niveau de sensibilité de la façon suivante :

$$\Delta 1 = max_{A \sim A'} \sum_{(i,j)\in S1} |Aij - Aij'|$$

et

$$\Delta 2 = max_{A \sim A'} \sum_{(i,j)\in S2} |Aij - Aij'|$$

Autrement dit, la sensibilité est définie dans ce mode de réalisation au moyen d'une norme $L_1$. Pour rappel, la norme $L_1$ d'un vecteur réel ou plus généralement d'un ensemble de d composantes réelles $v=(v_1,..,v_d)$ est définie par :

$$|v|_1 = \sum_{i=1}^{d} |v_i|$$

Ainsi, dans l'exemple des traces de mobilité envisagé ici, les arêtes (i,j) les plus sensibles qui appartiennent au sous-ensemble S2 peuvent par exemple correspondre à des transitions entre des antennes i et j qui correspondent au lieu d'habitation d'un individu, ou un lieu de travail (utilisation fréquente de ces antennes). *A contrario,* les arêtes les moins sensibles qui appartiennent au sous-ensemble S1 peuvent correspondre à des antennes relais situés dans des endroits fréquentés ponctuellement par des individus (ex. dans un aéroport, un parc, etc.).

Il convient de noter que la partition P(THR) dépend du seuil THR, celui-ci étant déterminé au préalable. Dans le mode de réalisation décrit ici, le seuil THR est choisi de sorte que la partition P(THR) minimise (ou quasiment) l'erreur du procédé d'anonymisation, c'est-à-dire l'erreur entre les données initiales et les données anonymes obtenues à l'issue de l'anonymisation. L'expression de cette erreur, qui dépend des cardinaux des sous-ensembles S1 et S2, ainsi que des niveaux de sensibilité Δ1 et Δ2, est donnée ultérieurement.

Conformément à l'invention, le dispositif d'anonymisation 3 rend alors anonymes les données sensibles de l'ensemble S en leur appliquant un bruit dont le niveau (i.e. l'amplitude) dépend de leur sensibilité, et plus particulièrement dont le niveau augmente avec le niveau de sensibilité des données (étape E50).

Dans le mode de réalisation décrit ici, à cet effet, le module d'anonymisation 3E du dispositif d'anonymisation 3 ajoute aux coefficients Aij sensibles de la matrice A (c'est-à-dire appartenant à l'ensemble S) un bruit ayant une distribution de Laplace et dont l'écart-type varie (augmente) en fonction de la sensibilité du sous-ensemble auquel appartiennent ces coefficients. Il génère ainsi une matrice de données bruitées, notée *Ã*, dont chaque coefficient noté *Âij* est défini par :

$$\tilde{A}ij = Aij + Bij$$

où :

- 

$$Bij = 0$$

*si (i, j)* ∉ *S*

- *Bij* suit une distribution de Laplace d'écart-type $\sigma 1 = \sqrt{2} \times \frac{2\Delta 1}{\varepsilon}$ si *(i, j)* ∈ *S1* ;

- *Bij* suit une distribution de Laplace d'écart-type $\sigma 2 = \sqrt{2} \times \frac{2\Delta 2}{\varepsilon}$ si *(i, j)* ∈ *S2* ; et

- $\varepsilon$ désigne une mesure du niveau d'anonymat garanti par l'algorithme.

Dans le cas où l'ensemble S est partitionné en L sous-ensembles S1,...,SL avec L>2 (via la prévision préalable de L-1 seuils), le module d'anonymisation 3E ajoute un bruit Bij à chaque coefficient Aij de la matrice A défini par :

- 

$$Bij = 0$$

*si (i, j)* ∉ *S*

- *Bij* suit une distribution de Laplace d'écart-type $\sigma l = \sqrt{2} \times \frac{L\Delta l}{\varepsilon}$ si *(i, j)* ∈ *Sl* ;

où Δ*l* désigne le niveau de sensibilité du sous-ensemble S*l*, 1≤*l*≤L et $\varepsilon$ désigne une mesure du niveau d'anonymat garanti par l'anonymisation réalisée.

Les données (coefficients) de la matrice *Ã* résultant de l'application d'un bruit aléatoire de Laplace ainsi défini sur les données sensibles de la matrice A, sont ainsi des données anonymes. Avantageusement, ces données présentent une meilleure qualité que les données obtenues via l'algorithme d'anonymisation de Dwork et al. décrit dans le document D2 et dans lequel un bruit d'amplitude homogène est appliqué sur l'ensemble des données de la matrice.

Par ailleurs, les inventeurs ont constaté que si on fait l'hypothèse qu'un individu peut agir dans la matrice A sur au plus m coefficients de la matrice, alors la relation suivante existe : Δ1 ≤ *m* × THR

Ainsi, si m et THR sont suffisamment petits, le niveau de sensibilité Δ1 sera négligeable par rapport au niveau de sensibilité Δ considéré dans l'algorithme d'anonymisation de Dwork et al. pour calibrer le bruit appliqué sur les données. Et plus il y aura de données dans S1 et Δ1 sera petit (i.e. plus il y a de données peu sensibles dans la matrice A), meilleures seront les performances obtenues grâce à l'invention par rapport à l'algorithme d'anonymisation de Dwork et al.

Dans un autre mode de réalisation, les niveaux de bruit appliqués aux sous-ensembles S1 et S2 de données sensibles sont choisis de sorte à minimiser une erreur évaluée entre les données initiales de la matrice A et les données anonymes de la matrice $\tilde{A}$ obtenue à l'issue de l'anonymisation réalisée à l'étape E50. Par exemple, si cette erreur notée ERR est définie mathématiquement à partir d'une norme $L_1$ suivant :

$$ERR = E[|\tilde{A} - A|]$$

E[.] désignant l'espérance mathématique, on peut aisément montrer que cette erreur ERR peut également s'exprimer sous la forme :

$$ERR = f(n1, n2, \Delta1, \Delta2) = \frac{\sqrt{2}}{\varepsilon} \times \left(\sqrt{n1\Delta1} + \sqrt{n2\Delta2}\right)$$

$n1$, respectivement n2, désignant le nombre de données sensibles dans l'ensemble S1, respectivement dans l'ensemble S2. Il convient de noter qu'une norme $L_1$ est particulièrement bien adaptée et plus facilement interprétable dans le cas d'un bruit laplacien, car elle s'appuie sur les mêmes opérations mathématiques que celles retenues pour définir la sensibilité de chaque sous-ensemble et calibrer le bruit. Toutefois en variante, d'autres définitions d'erreurs peuvent être considérées, par exemple une erreur définie mathématiquement à partir d'une norme $L_2$. Pour rappel, la norme $L_2$ d'un vecteur réel ou plus généralement d'un ensemble de d composantes réelles v=($v_1$,..,$v_d$) est définie par :

$$|v|_2 = \sqrt{\sum_{i=1}^{d} |v_i|^2}$$

La minimisation de l'erreur ERR permet de déterminer des écart-types de bruit « optimaux » pouvant être appliqués aux données des sous-ensembles S1 et S2 lors de l'étape d'anonymisation E50 et plus précisément :

$$\sigma1 = \sqrt{2} \times \frac{\Delta1}{\epsilon} \times \frac{\sqrt{n1\Delta1} + \sqrt{n2\Delta2}}{\sqrt{n1\Delta1}}$$

et

$$\sigma2 = \sqrt{2} \times \frac{\Delta2}{\epsilon} \times \frac{\sqrt{n1\Delta1} + \sqrt{n2\Delta2}}{\sqrt{n2\Delta2}}$$

L'expression de l'erreur ERR, et sa minimisation, permettent également de déterminer comme mentionné précédemment, le seuil THR utilisé pour partitionner l'ensemble S en deux sous-ensembles S1 et S2. A cet effet, il est possible de procéder par tâtonnement en considérant une pluralité de valeurs de seuils THR1, THR2,... comprises entre 0 et un niveau de sensibilité général Δ évalué sur l'ensemble des données sensibles de la matrice A (par exemple comme dans l'état de la technique et l'algorithme du document D2), et pour chacune de ces valeurs, la partition PART1,PART2,... en résultant. Puis, pour chacune de ces partitions PARTj, j=1,2,... l'erreur ERRj correspondante est calculée selon la formule donnée précédemment. Le seuil THR et la partition PART retenue est celle qui conduit à l'erreur ERRj minimale.

La matrice de données bruitées $\tilde{A}$ obtenue à l'issue de l'étape de bruitage E50 est une matrice de données anonymes au sens de l'invention. Elle garantit un niveau d'anonymat des données dont une mesure est donnée par le paramètre $\varepsilon$. Le procédé d'anonymisation selon l'invention constitué des étapes E10 à E50 est ainsi un algorithme ALG aléatoire de privacy (confidentialité) préférentielle $\varepsilon$-DP. Par algorithme aléatoire, on entend un algorithme ALG qui donne en sortie une matrice aléatoire selon une loi de probabilité qui dépend de la matrice initiale fournie en entrée de l'algorithme.

Comme mentionné précédemment, cela signifie que pour toutes matrices réelles voisines A~A', A et A' de dimensions KxK, on a :

$$\frac{P(\mathrm{ALG}(A) = M)}{P(\mathrm{ALG}(A') = M)} \le e^{\varepsilon}$$

pour toute matrice M réelle de dimension KxK, où P(E) désigne la probabilité d'une collection d'événements E.

Autrement dit, deux résultats de l'algorithme ALG(A) et ALG(A') ont quasiment la même loi de probabilité si les entrées de l'algorithme A et A' sont des matrices voisines. Le « quasiment » est quantifié par le paramètre $\varepsilon$ : plus ce paramètre est petit, plus les lois sont proches et plus il est difficile de détecter un individu en particulier dans la matrice ALG(A). Toutefois, plus ce paramètre est petit, plus la qualité également de la matrice ALG(A) se dégrade, i.e. plus la matrice ALG(A) s'éloigne de la matrice initiale A et plus on perd de l'information utile sur les données de A. L'algorithme d'anonymisation selon l'invention est un algorithme $\varepsilon$-DP tout comme l'algorithme décrit par Dwork et al. dans le document D2 mais qui permet d'obtenir une meilleure qualité des données anonymes (perte d'information limitée).

La **figure 5** illustre un deuxième mode de réalisation de l'invention, dans lequel le module d'anonymisation 3E du dispositif d'anonymisation 3 applique un traitement supplémentaire à la matrice A suite à l'étape E50 pour anonymiser ses données.

Dans ce deuxième mode de réalisation, les étapes E10 à E50 décrites précédemment en référence à la figure 4 et au premier mode de réalisation sont appliquées à la matrice A par le dispositif d'anonymisation, résultant en la matrice de données sensibles bruitées $\tilde{A}$.

L'étape E50 est ensuite suivie d'une décomposition de la matrice $\tilde{A}$ des données sensibles bruitées en valeurs singulières par le module d'anonymisation 3E (étape E60). Une telle décomposition en valeurs singulières ou SVD (pour Singular Value Decomposition) est connue de l'homme du métier et n'est pas décrite plus en détail ici. Elle peut être réalisée par exemple à l'aide de l'algorithme connu appelé « Power method ».

Cette décomposition SVD conduit en la détermination de trois matrices U, V et DIAG, telles que :

$$\tilde{A} = U.DIAG.V$$

où U et V sont des matrices orthogonales de dimension KxK et DIAG est une matrice diagonale, formée des valeurs singulières $\lambda 1, ... , \lambda K$ de la matrice $\tilde{A}$ rangées ici dans l'ordre décroissant $\lambda 1 \geq \lambda 2 \geq \cdots \geq \lambda K$, soit :

$$DIAG = \begin{bmatrix} \lambda 1 & 0 & & \cdots & & 0 \\ & \lambda 2 & & & & \\ & & 0 & \cdots & 0 & & \cdots \\ & & & & \lambda k & & \\ & & & & 0 & \cdots & \\ 0 & \cdots & & & & \cdots & \\ 0 & & & & & & \lambda K \end{bmatrix}$$

Le module d'anonymisation 3E détermine ensuite, à partir de la matrice diagonale DIAG, une nouvelle matrice diagonale DIAG(k) de rang k, k désignant un entier prédéterminé $1 \leq k \leq K$ (étape E70). Cette matrice DIAG(k) comprend sur sa diagonale les k plus grandes valeurs singulières de la matrice DIAG, les autres coefficients étant nuls, i.e. :

$$DIAG(k) = \begin{bmatrix} \lambda 1 & 0 & & \cdots & & 0 \\ & \lambda 2 & & & & \\ & & 0 & \cdots & 0 & & \cdots \\ & & & & \lambda k & & \\ & & & & 0 & 0 & \\ 0 & \cdots & & & & \cdots & \\ 0 & & & & & & 0 \end{bmatrix}$$

La matrice DIAG(k) ainsi obtenue est une approximation de la matrice DIAG, qui est « plus simple » que la matrice DIAG en ce qu'elle comprend moins de valeurs sur sa diagonale, bien que contenant l'essentiel de l'information contenue dans la matrice DIAG (puisqu'elle comprend ses valeurs singulières les plus grandes, autrement dit ses composantes principales). Ainsi, bien que l'anonymisation des données conduise à une perte d'information, cette perte est ici mesurée et particulièrement bien gérée.

La matrice DIAG(k) est ensuite utilisée par le module d'anonymisation 3E pour construire une matrice de données anonymes notée $\bar{\bar{A}}$ selon l'équation (étape E80) :

$$\bar{\bar{A}} = U.DIAG(k).V$$

On note que l'algorithme d'anonymisation proposé dans ce deuxième mode de réalisation est également un algorithme $\varepsilon$-DP. Les inventeurs ont constaté que cet algorithme donne de meilleurs résultats (i.e. données anonymes de meilleure qualité) encore que l'algorithme décrit en référence à la figure 4 (i.e. sans SVD). Il convient de noter par ailleurs que cet algorithme donne également de meilleurs résultats que l'algorithme de Dwork et al. décrit dans le document D2 auquel on appliquerait en plus une décomposition de type SVD.

Dans les deux modes de réalisation décrits ici, les données initiales D de la base de données 2 ont été anonymisées en appliquant un bruit suivant une distribution de Laplace aux données considérées comme sensibles. Toutefois, cette hypothèse n'est pas limitative en soi, et d'autres distributions de bruit pourraient être envisagées, telles que par exemple une distribution gaussienne dont l'écart-type serait ajusté en fonction de la sensibilité des données. Il est également possible d'envisager de bruiter les données des différents sous-ensembles avec des bruits distribués selon des lois différentes (ex. données les plus sensibles bruitées avec un bruit gaussien, données les moins sensibles bruitées avec un bruit de Laplace). On note cependant que l'utilisation de distributions différentes d'une distribution de Laplace peut se traduire par un niveau de confidentialité plus faible. On parle alors de confidentialité différentielle de type $(\varepsilon, \delta)$-DP.

Par ailleurs, dans les deux modes de réalisation décrits ici, on a considéré des sensibilités définies à partir de normes de type $L_1$ (valeur absolue d'une différence entre deux coefficients). Cette définition est particulièrement bien adaptée à des bruits laplaciens et aux définitions des niveaux de sensibilité envisagées dans ces deux modes de réalisation. Elle permet en outre de garantir un algorithme d'anonymisation $\varepsilon$-DP. En effet, les inventeurs ont constaté que dans le cas d'un bruit de Laplace, les niveaux de sensibilités définis à partir de la norme $L_1$ et utilisés dans les deux modes de réalisation illustrés aux figures 4 et 5 représentent les quantités à maitriser pour garantir formellement la confidentialité différentielle.

Toutefois, en variante, d'autres définitions du niveau de sensibilité de chaque donnée et de chaque sous-ensemble pourraient être envisagées, par exemple des définitions basées sur une norme $L_2$. Ainsi on pourrait envisager les définitions de niveaux de sensibilité suivantes pour les sous-ensembles S1 et S2 :

$$\Delta 1^{L_2} = max_{A \sim A'} \sqrt{\sum_{(i,j) \in S1} |Aij - Aij'|^2}$$

$$\Delta 2^{L_2} = max_{A \sim A'} \sqrt{\sum_{(i,j) \in S2} |Aij - Aij'|^2}$$

L'utilisation de niveaux de sensibilité ainsi définis à partir d'une norme $L_2$ devrait être accompagnée d'une modification appropriée des écart-types $\sigma 1$ et $\sigma 2$ des bruits appliqués lors de l'étape E50 afin de garantir la confidentialité différentielle.

L'utilisation d'une norme $L_2$ pour définir les niveaux de sensibilité est particulièrement bien adaptée lorsqu'un bruit gaussien est envisagé pour anonymiser les données. Bien que l'utilisation d'un bruit gaussien plutôt qu'un bruit laplacien se traduise par un niveau de confidentialité plus faible (en $(\varepsilon, \delta)$ au lieu de $\varepsilon$), il convient de noter qu'une meilleure précision peut être atteinte en combinant un bruit gaussien avec des niveaux de sensibilité définis à partir d'une norme $L_2$, comme proposé ci-dessus. En effet, la norme $L_2$ d'un vecteur étant de façon connue inférieure à la norme $L_1$ de ce même vecteur, l'erreur évaluée entre la matrice anonymisée et la matrice initiale sera plus faible.

Ainsi, dans l'exemple de la partition de l'ensemble des données sensibles S en deux sous-ensembles S1 et S2 dont les niveaux de sensibilité respectifs $\Delta 1^{L2}$ et $\Delta 2^{L2}$ sont définis à partir de la norme $L_2$ comme indiqué ci-dessus, on peut envisager pour obtenir un procédé d'anonymisation $(\varepsilon, \delta)$-DP de bruiter les données sensibles des ensembles S1 et S2 avec des bruits gaussiens dont les écarts-types $\sigma 1$ et $\sigma 2$ sont donnés respectivement par :

$$\sigma 1 = \frac{\Delta 1^{L_2} \times \alpha \times (\sqrt{\mu_1} + \sqrt{\mu_2})}{\varepsilon \sqrt{\mu_1}}$$

$$\sigma 2 = \frac{\Delta 2^{L_2} \times \alpha \times (\sqrt{\mu_1} + \sqrt{\mu_2})}{\varepsilon \sqrt{\mu_2}}$$

avec :

$$\alpha = \sqrt{2 \ln\left(\frac{1.25}{\delta}\right)}$$

$$\mu_1 = n_1 \times \Delta 1^{L_2} \times \alpha$$

$$\mu_2 = n_2 \times \Delta 2^{L_2} \times \alpha$$

$n_1$ désignant le nombre de données sensibles comprises dans l'ensemble S1 et $n_2$ désignant le nombre de données sensibles comprises dans l'ensemble S2. Ces écart-types permettent avantageusement de minimiser l'erreur $ERR = E[|\tilde{A} - A|]$ définie par la norme $L_1$ entre la matrice de données initiale et la matrice de données anonymes. L'invention a été illustrée ici à partir d'un exemple de matrice de données A dérivée d'un graphe d'appels d'une pluralité d'individus I1,...,IN. Comme mentionné précédemment, cet exemple n'est donné qu'à titre illustratif et l'invention s'applique à bien d'autres données personnelles que ce type de données, qui sont susceptibles d'être stockées dans une base de données d'un système informatique. Elle s'applique en outre de façon privilégiée à des données pouvant être représentées sous forme de graphes ou de matrices (une matrice d'adjacence pouvant être dérivée aisément à partir d'un graphe), telles que des données « dynamiques ». De telles données dynamiques sont par exemple des données en relation avec l'activité d'individus sur un ou plusieurs réseaux tels qu'un réseau de télécommunications mobile, fixe, le réseau public Internet, un réseau d'objets connectés, etc.

Ainsi, à titre d'exemples, les données personnelles d'individus considérées peuvent être :

- des données représentatives d'un historique de navigation d'internautes : les sommets du graphe G(In) d'un individu In seraient alors les adresses de sites web ou URL (Uniform Resource Locator) visitées par cet individu durant une période de temps prédéterminée, et le poids de chaque arête (i,j) correspondrait au nombre de transitions effectuées par cet individu de l'URL i vers l'URL j pendant la période de temps considérée ;
- des données représentatives de l'activité d'individus sur un réseau social : le graphe G(In) d'un individu In serait alors un graphe social représentant les connexions de cet individu, et le poids de chaque arête (i,j) correspondrait au nombre de transitions effectuées par cet individu d'une personne i de son réseau vers une personne j ;
- des données représentatives de l'activité d'individus sur un réseau d'objets connectés : chaque sommet du graphe G(In) d'un individu In représenterait un type d'objet connecté (ex. une montre, une cafetière, etc.), et le poids de chaque arête (i,j) illustrerait le nombre de déplacements de l'individu d'un objet connecté i à un objet connecté j, autrement dit, le nombre de fois où l'individu In a utilisé l'objet connecté j après l'objet connecté i.

Grâce au procédé d'anonymisation selon l'invention, les données personnelles ainsi acquises sur les individus I1,...IN, peuvent être publiées (dans leur forme agrégée et anonymisée) sans risque de divulguer des informations sur chaque individu en particulier.

**Revendications**

1. Procédé mis en œuvre par ordinateur pour anonymiser des données dites initiales stockées dans une base de données d'un système informatique, lesdites données initiales résultant d'une agrégation de données personnelles relatives à une pluralité d'individus et étant stockées dans la base de données sous la forme d'une matrice, le procédé d'anonymisation comprenant :

   - une étape d'identification (E20) parmi les données initiales d'un ensemble de données dites sensibles, une donnée sensible étant telle que sa valeur dans ladite matrice est susceptible d'être modifiée par l'ajout ou le retrait dans la base de données de données personnelles relatives à un individu ;
   - une étape de partitionnement (E30) de l'ensemble de données sensibles comportant :

      • une évaluation d'un niveau de sensibilité par donnée sensible identifiée,
      • un partitionnement de l'ensemble de données sensibles en une pluralité de sous-ensembles en fonction des niveaux de sensibilité évalués ;

   - une étape de détermination (E40) d'un niveau de sensibilité pour chaque sous-ensemble ; et
   - une étape d'anonymisation (E50, E80) des données initiales comprenant, pour chaque sous-ensemble, un bruitage des données sensibles de ce sous-ensemble selon un niveau de bruit dépendant du niveau de sensibilité déterminé pour le sous-ensemble,

   ledit procédé étant **caractérisé en ce que** :

- au cours de l'étape de partitionnement, le niveau de sensibilité d'une donnée sensible est défini comme la valeur maximale, prise sur l'ensemble des matrices voisines de la matrice de données initiales, de la valeur absolue de la différence entre cette donnée sensible et la donnée sensible correspondante de la matrice voisine considérée, cette matrice voisine différant de la matrice de données initiales en raison des données personnelles d'un unique individu ; et/ou

- au cours de l'étape de détermination, le niveau de sensibilité d'un sous-ensemble de données sensibles est défini comme la valeur maximale, prise sur l'ensemble des matrices voisines de la matrice de données initiales, de la somme sur toutes les données sensibles de ce sous-ensemble de la valeur absolue de la différence entre chaque donnée sensible et la donnée sensible correspondante de la matrice voisine considérée.

2. Procédé d'anonymisation selon la revendication 1 dans lequel lors de l'étape d'anonymisation (E50) des données initiales, le niveau de bruit appliqué sur les données sensibles d'un sous-ensemble augmente avec le niveau de sensibilité de ce sous-ensemble.

3. Procédé d'anonymisation selon la revendication 1 ou 2 dans lequel le bruitage (E50) des données sensibles d'au moins un sous-ensemble indexé par i comprend l'ajout d'un bruit à ces données sensibles ayant une distribution de Laplace et dont un écart-type $\sigma_i$ est défini à partir du niveau de sensibilité $\Delta_i$ déterminé pour le sous-ensemble et d'une mesure $\varepsilon$ d'un niveau d'anonymat de l'anonymisation des données initiales.

4. Procédé d'anonymisation selon la revendication 3 dans lequel l'écart-type $\sigma_i$ est égal à :

$$\sigma_i = \sqrt{2} \times \frac{L\Delta_i}{\varepsilon}$$

où L désigne le nombre de sous-ensembles contenus dans la pluralité de sous-ensembles.

5. Procédé d'anonymisation selon la revendication 1 ou 2 dans lequel dans lequel le bruitage (E50) des données sensibles d'au moins un sous-ensemble indexé par i comprend l'ajout d'un bruit à ces données sensibles ayant une distribution gaussienne.

6. Procédé d'anonymisation selon l'une quelconque des revendications 1 à 5, dans lequel l'étape d'anonymisation comprend en outre une décomposition (E60) de la matrice des données sensibles bruitées en valeurs singulières et une détermination (E70,E80) de la matrice des données anonymes à partir d'un nombre déterminé de valeurs singulières résultant de cette décomposition.

7. Procédé d'anonymisation selon l'une quelconque des revendications 1 à 6 dans lequel les données personnelles de la pluralité d'individus comprennent des données en relation avec une activité de ces individus sur au moins un réseau.

8. Programme d'ordinateur comportant des instructions pour l'exécution des étapes du procédé d'anonymisation selon l'une quelconque des revendications 1 à 7 lorsque ledit programme est exécuté par un ordinateur.

9. Support d'enregistrement lisible par un ordinateur sur lequel est enregistré un programme d'ordinateur comprenant des instructions pour l'exécution des étapes du procédé de d'anonymisation selon l'une quelconque des revendications 1 à 7.

10. Dispositif d'anonymisation (3) de données dites initiales stockées dans une base de données, ces données initiales résultant d'une agrégation de données personnelles relatives à une pluralité d'individus et étant stockées dans la base de données sous la forme d'une matrice, le dispositif d'anonymisation comprenant :

- un module d'identification (3B) configuré pour identifier parmi les données initiales un ensemble de données dites sensibles, une donnée sensible étant telle que sa valeur dans ladite matrice est susceptible d'être modifiée par l'ajout ou le retrait dans la base de données de données personnelles relatives à un individu ;
- un module de partitionnement (3C) configuré pour :

  • évaluer un niveau de sensibilité par donnée sensible identifiée,
  • partitionner l'ensemble de données sensibles en une pluralité de sous-ensembles en fonction des niveaux de sensibilité évalués ;

- un module de détermination (3D) configuré pour déterminer un niveau de sensibilité pour chaque sous-ensemble ; et
- un module d'anonymisation (3E) des données initiales configuré pour bruiter les données sensibles de chaque sous-ensemble selon un niveau de bruit dépendant du niveau de sensibilité déterminé pour ce sous-ensemble,

ledit dispositif étant **caractérisé en ce que** :

- ledit module de partitionnement est tel que le niveau de sensibilité d'une donnée sensible est défini comme la valeur maximale, prise sur l'ensemble des matrices voisines de la matrice de données initiales, de la valeur absolue de la différence entre cette donnée sensible et la donnée sensible correspondante de la matrice voisine considérée, cette matrice voisine différant de la matrice de données initiales en raison des données personnelles d'un unique individu ; et/ou **en ce que**
- le module de détermination est tel que le niveau de sensibilité d'un sous-ensemble de données sensibles est défini comme la valeur maximale, prise sur l'ensemble des matrices voisines de la matrice de données initiales, de la somme sur toutes les données sensibles de ce sous-ensemble de la valeur absolue de la différence entre chaque donnée sensible et la donnée sensible correspondante de la matrice voisine considérée.

**11.** Système informatique (1) comprenant :

- une base de données (2) dans laquelle sont stockées sous la forme d'une matrice des données dites initiales résultant d'une agrégation de données personnelles relatives à une pluralité d'individus ; et
- un dispositif d'anonymisation (3) des données initiales selon la revendication 10.

## Patentansprüche

**1.** Verfahren, das von einem Computer durchgeführt wird, um sogenannte Ausgangsdaten, die in einer Datenbank eines Rechnersystems gespeichert sind, zu anonymisieren, wobei die Ausgangsdaten aus einer Aggregation von personenbezogenen Daten bezüglich einer Mehrzahl von Personen resultieren und in der Datenbank in Form einer Matrix gespeichert sind, wobei das Anonymisierungsverfahren Folgendes umfasst:

- einen Schritt des Identifizierens (E20) einer Menge von sogenannten sensiblen Daten unter den Ausgangsdaten, wobei ein sensibles Datum derart ist, dass sein Wert in der Matrix durch Hinzufügen oder Entfernen von personenbezogenen Daten bezüglich einer Person in der Datenbank geändert werden kann;
- einen Schritt des Partitionierens (E30) der Menge von sensiblen Daten, umfassend:

  • ein Bewerten eines Sensibilitätsniveaus je identifiziertes sensibles Datum,
  • ein Partitionieren der Menge von sensiblen Daten in eine Mehrzahl von Teilmengen in Abhängigkeit von den bewerteten Sensibilitätsniveaus;

- einen Schritt des Bestimmens (E40) eines Sensibilitätsniveaus für jede Teilmenge; und
- einen Schritt des Anonymisierens (E50, E80) der Ausgangsdaten, umfassend, für jede Teilmenge, ein Verrauschen der sensiblen Daten dieser Teilmenge gemäß einem Rauschniveau, das von dem für die Teilmenge bestimmten Sensibilitätsniveau abhängt,

wobei das Verfahren **dadurch gekennzeichnet ist, dass**:

- während des Schritts des Partitionierens das Sensibilitätsniveau eines sensiblen Datums als der Maximalwert, über alle Nachbarmatrizen der Matrix mit Ausgangsdatenmatrix genommen, des Betrags der Differenz zwischen diesem sensiblen Datum und dem entsprechenden sensiblen Datum der betrachteten Nachbarmatrix definiert ist, wobei sich diese Nachbarmatrix von der Matrix mit Ausgangsdaten durch personenbezogene Daten einer einzigen Person unterscheidet; und/oder
- während des Schritts des Bestimmens das Sensibilitätsniveau einer Teilmenge von sensiblen Daten als der Maximalwert, über alle Nachbarmatrizen der Matrix mit Ausgangsdaten genommen, der Summe über alle sensiblen Daten dieser Teilmenge des Betrags der Differenz zwischen jedem sensiblen Datum und dem entsprechenden sensiblen Datum der betrachteten Nachbarmatrix definiert ist.

**2.** Anonymisierungsverfahren nach Anspruch 1, wobei bei dem Schritt des Anonymisierens (E50) der Ausgangsdaten das auf die sensiblen Daten einer Teilmenge angewandte Rauschniveau mit dem Sensibilitätsniveau dieser Teilmenge steigt.

**3.** Anonymisierungsverfahren nach Anspruch 1 oder 2, wobei das Verrauschen (E50) der sensiblen Daten mindestens einer durch i indizierten Teilmenge das Hinzufügen eines Rauschen zu diesen sensiblen Daten umfasst, das eine Laplace-Verteilung aufweist und dessen Standardabweichung $\sigma_i$ ausgehend von dem für die Teilmenge bestimmten Sensibilitätsniveau $\Delta_i$ und von einem Maß $\varepsilon$ eines Anonymitätsniveaus der Anonymisierung der Ausgangsdaten definiert ist.

**4.** Anonymisierungsverfahren nach Anspruch 3, wobei die Standardabweichung $\sigma_i$ gleich Folgendem ist:

$$\sigma_i = \sqrt{2} \times \frac{L\Delta_i}{\varepsilon}$$

worin L die Anzahl von Teilmengen bezeichnet, die in der Mehrzahl von Teilmengen enthalten sind.

**5.** Anonymisierungsverfahren nach Anspruch 1 oder 2, wobei das Verrauschen (E50) der sensiblen Daten mindestens einer durch i indizierten Teilmenge das Hinzufügen eines Rauschens zu diesen sensiblen Daten umfasst, das eine Gaußsche Verteilung aufweist.

**6.** Anonymisierungsverfahren nach einem der Ansprüche 1 bis 5, wobei der Schritt des Anonymisierens ferner ein Zerlegen (E60) der Matrix der verrauschten sensiblen Daten in Singulärwerte und ein Bestimmen (E70, E80) der Matrix der anonymen Daten ausgehend von einer bestimmten Anzahl von Singulärwerten, die aus dieser Zerlegung resultieren, umfasst.

**7.** Anonymisierungsverfahren nach einem der Ansprüche 1 bis 6, wobei die personenbezogenen Daten der Mehrzahl von Personen Daten in Verbindung mit einer Aktivität dieser Personen in mindestens einem Netzwerk umfassen.

**8.** Computerprogramm, das Anweisungen umfasst, die bei der Ausführung des Programms durch einen Computer die Schritte des Anonymisierungsverfahrens nach einem der Ansprüche 1 bis 7 ausführen.

**9.** Computerlesbares Speichermedium, auf dem ein Computerprogramm gespeichert ist, das Anweisungen zur Ausführung der Schritte des Anonymisierungsverfahrens nach einem der Ansprüche 1 bis 7 umfasst.

**10.** Vorrichtung zur Anonymisierung (3) von sogenannten Ausgangsdaten, die in einer Datenbank gespeichert sind, wobei diese Ausgangsdaten aus einer Aggregation von personenbezogenen Daten bezüglich einer Mehrzahl von Personen resultieren und in der Datenbank in Form einer Matrix gespeichert sind, wobei die Vorrichtung zur Anonymisierung Folgendes umfasst:

   - ein Identifizierungsmodul (3B), das dazu ausgelegt ist, unter den Ausgangsdaten eine Menge von sogenannten sensiblen Daten zu identifizieren, wobei ein sensibles Datum derart ist, dass sein Wert in der Matrix durch Hinzufügen oder Entfernen von personenbezogenen Daten bezüglich einer Person in der Datenbank geändert werden kann;
   - ein Partitionierungsmodul (3C), das dazu ausgelegt ist:

      • ein Sensibilitätsniveau je identifiziertes sensibles Datum zu bewerten,
      • die Menge von sensiblen Daten in eine Mehrzahl von Teilmengen in Abhängigkeit von den bewerteten Sensibilitätsniveaus zu partitionieren;

   - ein Bestimmungsmodul (3D), das dazu ausgelegt ist, ein Sensibilitätsniveau für jede Teilmenge zu bestimmen; und
   - ein Anonymisierungsmodul (3E) für die Ausgangsdaten, das dazu ausgelegt ist, die sensiblen Daten jeder Teilmenge gemäß einem Rauschniveau zu verrauschen, das von dem für diese Teilmenge bestimmten Sensibilitätsniveau abhängt,

wobei die Vorrichtung **dadurch gekennzeichnet ist, dass**:

- das Partitionierungsmodul derart ist, dass das Sensibilitätsniveau eines sensiblen Datums als der Maximalwert, über alle Nachbarmatrizen der Matrix mit Ausgangsdaten genommen, des Betrags der Differenz zwischen diesem sensiblen Datum und dem entsprechenden sensiblen Datum der betrachteten Nachbarmatrix definiert ist, wobei sich diese Nachbarmatrix von der Matrix mit Ausgangsdaten durch personenbezogene Daten einer einzigen Person unterscheidet; und/oder dass

- das Bestimmungsmodul derart ist, dass das Sensibilitätsniveau einer Teilmenge von sensiblen Daten als der Maximalwert, über alle Nachbarmatrizen der Matrix mit Ausgangsdaten genommen, der Summe über alle sensiblen Daten dieser Teilmenge des Betrags der Differenz zwischen jedem sensiblen Datum und dem entsprechenden sensiblen Datum der betrachteten Nachbarmatrix definiert ist.

**11.** Rechnersystem (1), umfassend:

- eine Datenbank (2), in der in Form einer Matrix sogenannte Ausgangsdaten gespeichert sind, die aus einer Aggregation von personenbezogenen Daten bezüglich einer Mehrzahl von Personen resultieren; und
- eine Vorrichtung zur Anonymisierung (3) der Ausgangsdaten nach Anspruch 10.

**Claims**

**1.** Computer-implemented method of anonymization of so-called initial data stored in a database of a computer system, said initial data resulting from an aggregation of personal data relating to a plurality of individuals and being stored in the database in the form of a matrix, the anonymization method comprising:

- a step (E20) of identifying among the initial data a set of data referred to as sensitive data, a sensitive datum being such that its value in said matrix is capable of being modified by adding to or removing from the database personal data relating to an individual;
- a step (E30) of partitioning the set of sensitive data, comprising:

  • evaluating one sensitivity level per identified sensitive datum,
  • partitioning the set of sensitive data into a plurality of subsets according to the evaluated sensitivity levels;

- a step (E40) of determining a sensitivity level for each subset; and
- a step (E50, E80) of anonymizing the initial data comprising, for each subset, noise-izing the sensitive data of this subset according to a noise level dependent on the sensitivity level determined for the subset,

said method being **characterized in that**:

- during the partitioning step, the sensitivity level of a sensitive datum is defined as the maximum value, taken on all the neighbouring matrices of the initial data matrix, of the absolute value of the difference between this sensitive datum and the corresponding sensitive datum of the neighbouring matrix considered, this neighbouring matrix differing from the initial data matrix in the personal data of a single individual; and/or
- during the determination step, the sensitivity level of a subset of sensitive data is defined as the maximum value, taken on all the neighbouring matrices of the initial data matrix, of the sum over all the sensitive data of this subset of the absolute value of the difference between each sensitive datum and the corresponding sensitive datum of the neighbouring matrix considered.

**2.** Anonymization method according to Claim 1, wherein during the step (E50) of anonymizing the initial data, the noise level applied to the sensitive data of a subset increases with the sensitivity level of this subset.

**3.** Anonymization method according to Claim 1 or 2, wherein the noise-izing (E50) of the sensitive data of at least one subset indexed by i comprises the addition of a noise to these sensitive data having a Laplace distribution and a standard deviation $\sigma_i$ of which is defined on the basis of the sensitivity level $\Delta_i$ determined for the subset and of a measurement $\varepsilon$ of an anonymity level of the anonymization of the initial data

**4.** Anonymization method according to Claim 3, wherein the standard deviation $\sigma_i$ is equal to:

$$\sigma_i = \sqrt{2} \times \frac{L\Delta_i}{\varepsilon}$$

where L denotes the number of subsets contained in the plurality of subsets.

5. Anonymization method according to Claim 1 or 2, wherein the noise-izing (E50) of the sensitive data of at least one subset indexed by i comprises the addition of a noise to these sensitive data having a Gaussian distribution.

6. Anonymization method according to any one of Claims 1 to 5, wherein the anonymization step further comprises a decomposition (E60) of the matrix of the noisy sensitive data into singular values and a determination (E70, E80) of the matrix of the anonymous data from a determined number of singular values resulting from this decomposition.

7. Anonymization method according to any one of Claims 1 to 6, wherein the personal data of the plurality of individuals comprise data relating to an activity of these individuals on at least one network.

8. Computer program comprising instructions for the execution of the steps of the anonymization method according to any one of Claims 1 to 7 when said program is executed by a computer.

9. Computer-readable recording medium having recorded thereon a computer program comprising instructions for executing the steps of the anonymization method according to any one of Claims 1 to 7.

10. Device (3) for anonymizing so-called initial data stored in a database, these initial data resulting from an aggregation of personal data relating to a plurality of individuals and being stored in the database in the form of a matrix, the anonymization device comprising:

    - an identification module (3B) configured to identify among the initial data a set of data referred to as sensitive data, a sensitive datum being such that its value in said matrix is capable of being modified by adding to or removing from the database personal data relating to an individual;
    - a partitioning module (3C) configured to:

        • evaluate one sensitivity level per identified sensitive datum,
        • partition the set of sensitive data into a plurality of subsets according to the evaluated sensitivity levels;

    - a determination module (3D) configured to determine a sensitivity level for each subset; and
    - an anonymization module (3E) for anonymizing the initial data, which is configured to noise-ize the sensitive data of each subset according to a noise level dependent on the sensitivity level determined for this subset,

said device being **characterized in that**:

    - said partitioning module is such that the sensitivity level of a sensitive datum is defined as the maximum value, taken on all the neighbouring matrices of the initial data matrix, of the absolute value of the difference between this sensitive datum and the corresponding sensitive datum of the neighbouring matrix considered, this neighbouring matrix differing from the initial data matrix in the personal data of a single individual; and/or **in that**
    - the determination module is such that the sensitivity level of a subset of sensitive data is defined as the maximum value, taken on all the neighbouring matrices of the initial data matrix, of the sum over all the sensitive data of this subset of the absolute value of the difference between each sensitive datum and the corresponding sensitive datum of the neighbouring matrix considered.

11. Computer system (1) comprising:

    - a database (2) in which so-called initial data resulting from an aggregation of personal data relating to a plurality of individuals are stored in the form of a matrix; and
    - a device (3) for anonymizing initial data according to Claim 10.

FIG.1

FIG.2

FIG.3

| | |
|---|---|
| OBT A | ⌐ E10 |
| IDENT S | ⌐ E20 |
| PART S → S1,S2 | ⌐ E30 |
| DET Δ1,Δ2 | ⌐ E40 |
| APP B/Δ1,Δ2 → $\tilde{A}$ | ⌐ E50 |

**FIG.4**

| | |
|---|---|
| OBT A | ⌐ E10 |
| IDENT S | ⌐ E20 |
| PART S → S1,S2 | ⌐ E30 |
| DET Δ1,Δ2 | ⌐ E40 |
| APP B/Δ1,Δ2 → $\tilde{A}$ | ⌐ E50 |
| SVD $(\hat{\tilde{A}})$ | ⌐ E60 |
| DET DIAG(k) | ⌐ E70 |
| OBT $\overline{\overline{A}}$ | ⌐ E80 |

**FIG.5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013145473 A

**Littérature non-brevet citée dans la description**

- **C. DWORK** ; **F. MCSHERRY** ; **K. NISSIM** ; **A. SMITH**. Calibrating Noise to Sensitivity in Private Data Analysis. *Theory of Cryptography*, 2006, 265-284
- **C. DWORK** ; **K. TALWAR** ; **A. THAKURTA** ; **L. ZHANG**. Analyze Gauss : Optimal Bounds for Privacy-Preserving Principal Component Analysis. *STOC'14*, 31 May 2014

- **SHEN-SHYANG HO et al.** Differential privacy for locatin pattern mining. *Proceedings of the 4th ACM Sigspatial International Workshop on Security and Privacy in GIS and LBS, Springl'11*, 01 January 2011
- **GEORGIOS KELLARIS et al.** Practical differential privacy via grouping and smoothing. *PROCEEDINGS OF THE VLDB ENDOWMENT*, 01 March 2013, vol. 6 (5)